(19) Europäisches Patentamt
European Patent Office
Office européen des brevets

(11) **EP 4 560 487 A1**

(12) **EUROPEAN PATENT APPLICATION**
published in accordance with Art. 153(4) EPC

(43) Date of publication:
**28.05.2025 Bulletin 2025/22**

(21) Application number: **23856415.7**

(22) Date of filing: **31.07.2023**

(51) International Patent Classification (IPC):
**_G06F 16/2458_** (2019.01)

(52) Cooperative Patent Classification (CPC):
**G06F 16/242; G06F 16/2458; G06F 18/214**

(86) International application number:
**PCT/CN2023/110392**

(87) International publication number:
**WO 2024/041325 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022 CN 202211020433**

(71) Applicant: **Huawei Cloud Computing Technologies Co., Ltd.**
**Guiyang, Guizhou 550025 (CN)**

(72) Inventors:
• **XIE, Jiandong**
**Guiyang, Guizhou 550025 (CN)**
• **HUANG, Feiteng**
**Guiyang, Guizhou 550025 (CN)**
• **ZHOU, Rui**
**Guiyang, Guizhou 550025 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **TIMING DATA ANALYSIS METHOD AND APPARATUS, AND COMPUTING DEVICE AND STORAGE MEDIUM**

(57) This application provides a time series data analysis method and apparatus, a computing device, and a storage medium. The time series data analysis method includes: in response to a first analysis mode input by a user, analyzing first time series data by using a first time series analysis operator; updating the first time series analysis operator based on the first time series data and a first model parameter in the first time series analysis operator; and then analyzing second time series data after the first time series data by using an updated first time series analysis operator. The method can improve efficiency of analyzing time series data and reduce costs of analyzing the time series data.

FIG. 3

## Description

This application claims priority to Chinese Patent Application No. 202211020433.4, filed with the China National Intellectual Property Administration on August 24, 2022 and entitled "TIME SERIES DATA ANALYSIS METHOD AND APPARATUS, COMPUTING DEVICE, AND STORAGE MEDIUM", which is incorporated herein by reference in its entirety.

## TECHNICAL FIELD

This application relates to the field of time series data analysis, and in particular, to a time series data analysis method and apparatus, a computing device, and a storage medium.

## BACKGROUND

Time series data is characterized by a large amount, low information density, and the like. Consequently, it is very difficult to extract useful information from the time series data merely through manual analysis. Therefore, how to efficiently analyze the time series data with low costs is currently still a problem that urgently needs to be resolved in the field of time series analysis.

## SUMMARY

This application provides a time series data analysis method and apparatus, a computing device, and a storage medium, to improve efficiency of analyzing time series data and reduce costs of analyzing the time series data.

According to a first aspect, an embodiment of this application provides a time series data analysis method. The method includes: in response to a first analysis mode input by a user, analyzing first time series data by using a first time series analysis operator; updating the first time series analysis operator based on the first time series data and a first model parameter in the first time series analysis operator; and then analyzing second time series data by using an updated first time series analysis operator, where the second time series data is after the first time series data. According to the foregoing method, the first time series analysis operator may be used to analyze time series data. Therefore, compared with manual analysis, the method can improve efficiency of analyzing the time series data and reduce costs of analyzing the time series data. In addition, in the method, the analyzed time series data (that is, the first time series data) is further used to update the first time series analysis operator, and the updated first time series analysis operator can be further used to analyze subsequent time series data. Therefore, efficiency and accuracy of analyzing the time series data can be further improved.

In a possible implementation of the first aspect, the first time series analysis operator is obtained through training based on third time series data. The third time series data is before the first time series data.

In a possible implementation of the first aspect, the updating the first time series analysis operator based on the first time series data and a first model parameter in the first time series analysis operator includes: determining a second model parameter based on the first time series data and the first model parameter in the first time series analysis operator, and then determining the updated first time series analysis operator based on the second model parameter. Because the first model parameter in the first time series analysis operator is obtained through training based on the third time series data, and the second model parameter is obtained through calculation based on the first model parameter and the first time series data, a second model parameter in the updated first time series analysis operator is obtained through training based on the third time series data and the first time series data. In this way, accuracy of analyzing the second time series data can be improved by using the updated first time series analysis operator to analyze the second time series data.

In a possible implementation of the first aspect, the method further includes: storing the second model parameter. In this way, it is convenient to obtain the updated first time series analysis operator. In addition, after the second time series data is analyzed by using the updated first time series analysis operator, the updated first time series analysis operator can be further updated by using the second model parameter and the second time series data.

In a possible implementation of the first aspect, the method further includes: obtaining the first time series data, the second time series data, and the third time series data from a time series database.

In a possible implementation of the first aspect, the method further includes: in response to a second analysis mode input by the user, analyzing the first time series data by using a second time series analysis operator. The second time series analysis operator is obtained through training based on the first time series data.

According to the foregoing method, the user may select an appropriate analysis mode based on an actual service requirement. Compared with the second analysis mode, when the time series data is analyzed in the first analysis mode, a trained time series analysis operator may be updated based on the analyzed time series data, to analyze subsequent time series data. Compared with the second analysis mode, in the first analysis mode, a time series analysis operator does not need to be retrained each time the time series data is analyzed. This improves time series analysis efficiency and saves various resources required for time series analysis. Therefore, the first analysis mode is more applicable to a scenario in which the time series data needs to be analyzed periodically or frequently.

According to a second aspect, an embodiment of this application provides a time series analysis apparatus. The apparatus includes an analysis module and an update module. The analysis module is configured to: in response to a first analysis mode input by a user, analyze first time series data by using a first time series analysis operator. The update module is configured to update the first time series analysis operator based on the first time series data and a first model parameter in the first time series analysis operator. The analysis module is further configured to analyze the second time series data by using an updated first time series analysis operator, where the second time series data is after the first time series data.

In a possible implementation of the second aspect, the update module is configured to determine a second model parameter based on the first time series data and the first model parameter in the first time series analysis operator, and then determine the updated first time series analysis operator based on the second model parameter.

In a possible implementation of the second aspect, the apparatus further includes a storage module. The storage module is configured to store the second model parameter.

In a possible implementation of the second aspect, the first time series analysis operator is obtained through training based on third time series data. The third time series data is before the first time series data.

In a possible implementation of the second aspect, the analysis module is further configured to obtain the first time series data, the second time series data, and the third time series data from a time series database.

In a possible implementation of the second aspect, the analysis module is further configured to: in response to a second analysis mode input by a user, analyze the first time series data by using a second time series analysis operator. The second time series analysis operator is obtained through training based on the first time series data.

According to a third aspect, an embodiment of this application provides a computing device. The computing device includes a processor and a memory. The processor executes computer program code stored in the memory to implement some or all methods described in any one of the first aspect and the implementations of the first aspect.

According to a fourth aspect, an embodiment of this application provides a computer-readable storage medium. The computer storage medium stores computer program code. When the computer program code is executed by a computing device, the computing device performs some or all methods described in any one of the first aspect and the implementations of the first aspect.

According to a fifth aspect, an embodiment of this application provides a computer program product. The computer program product may be software or a program product that includes instructions and that can run on a computing device or can be stored in any usable medium. When the computer program product runs on at least one computing device, the at least one computing device is enabled to perform some or all methods described in any one of the first aspect and the implementations of the first aspect.

## BRIEF DESCRIPTION OF DRAWINGS

FIG. 1 is a diagram of an application scenario of a time series analysis apparatus according to an embodiment of this application;
FIG. 2 is a diagram of a structure of a time series database according to an embodiment of this application;
FIG. 3 is a schematic flowchart of a time series data analysis method according to an embodiment of this application;
FIG. 4 is a diagram of a structure of a time series analysis apparatus according to an embodiment of this application;
FIG. 5 is a diagram of a structure of a computing device according to an embodiment of this application;
FIG. 6 is a diagram of a structure of a computing device cluster according to an embodiment of this application; and
FIG. 7 is a diagram of a structure of another computing device cluster according to an embodiment of this application.

## DESCRIPTION OF EMBODIMENTS

The following describes the solutions in embodiments of this application with reference to the accompanying drawings in this application.

Time series data is a data sequence arranged in a time sequence, for example, various types of indicator data detected by using a machine (for example, temperature data and atmospheric pressure data detected by a sensor of an internet of things (internet of things, IoT) device), various pieces of indicator data (including processor usage, a memory bandwidth, and the like) obtained when a server runs a service, and trend data of a financial indicator (including a growth rate of money supply, an actual interest rate, an inflation rate, and the like).

The time series data is characterized by a large amount, low information density, and the like. Consequently, if the time series data is merely analyzed manually, massive manpower and material resources are wasted, and there is a problem of low efficiency. A monitoring scenario of a cloud service is used as an example. One cloud service may be run on a plurality of VMs. To monitor a running status of the cloud service, a running parameter of each VM needs to be monitored in real time. Therefore, when the cloud service is faulty, a detected running parameter of each VM needs to be manually analyzed in a timely manner, to analyze a faulty VM. This is a heavy workload in manual operations.

Therefore, an embodiment of this application provides a time series analysis apparatus based on an artificial intelligence (artificial intelligence, AI) technology. The apparatus analyzes time series data by using a time series analysis operator. The time series analysis operator is an operator used for time series analysis, and may include one or more AI models. The AI model is a general term of mathematical algorithms constructed based on an AI principle, and is also a basis for resolving a specific problem by using AI. Based on different specific methods and/or technologies for implementing artificial intelligence, the AI model may also be specifically referred to as a machine learning model, a deep learning model, or a reinforcement learning model. The time series analysis operator may be understood as an engineering implementation of the foregoing one or more AI models, that is, the foregoing one or more AI models are encapsulated and then deployed on a corresponding device, to apply the AI models. The time series analysis apparatus may analyze the time series data by using the foregoing time series analysis operator, including one or more of the following: predicting a target that may be achieved in the future in time domain, extracting a feature of the time series data (for example, a periodicity and stability of the time series data), and determining abnormal data in the time series data.

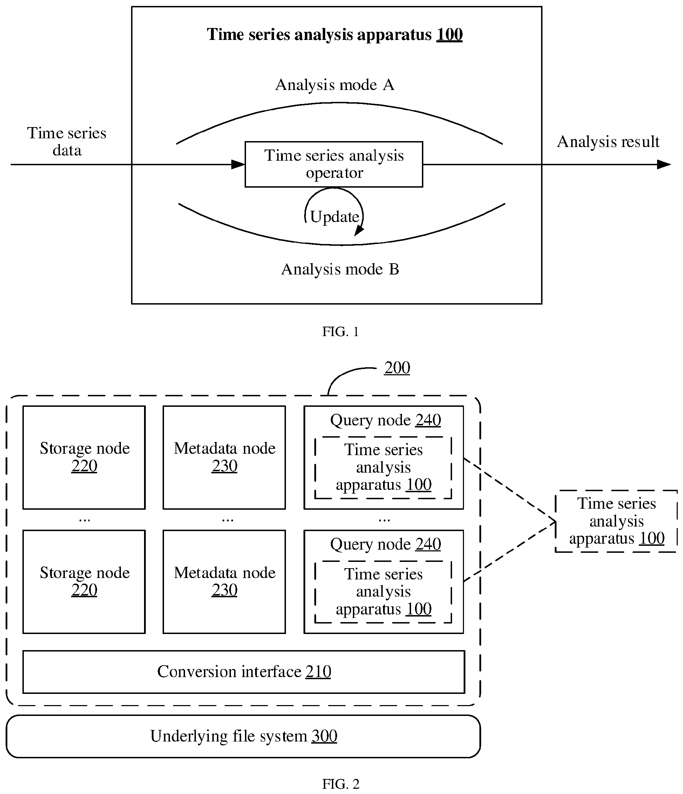

With reference to an application scenario of time series data analysis, the foregoing time series analysis apparatus provides two analysis modes for the time series data analysis, that is, an analysis mode A and an analysis mode B. As shown in FIG. 1, in the analysis mode A, after obtaining to-be-analyzed time series data, a time series analysis apparatus 100 analyzes the time series data by using a time series analysis operator, to obtain an analysis result. In the analysis mode B, after obtaining the to-be-analyzed time series data, the time series analysis apparatus 100 analyzes the time series data by using the time series analysis operator, to obtain the analysis result; and further updates the time series analysis operator based on the time series data, and stores an updated time series analysis operator, so that the updated time series analysis operator can be used to analyze future time series data. In a specific implementation, the time series analysis apparatus 100 may analyze the time series data in an appropriate analysis mode based on an actual application scenario.

Deployment of the time series analysis apparatus 100 is flexible. For example, the time series analysis apparatus 100 may be independently deployed in one device, or may be deployed in a plurality of devices in a distributed manner. It should be understood that the deployment of the time series analysis apparatus 100 is not limited in embodiments of this application, and an actual deployment form of the time series analysis apparatus 100 may be adaptively changed based on a specific application requirement.

In some embodiments, the time series analysis apparatus 100 obtains time series data in various manners. For example, the time series analysis apparatus 100 may obtain the time series data from a time series database, a big data platform (for example, Spark), a Kafka system, or a portal (portal) website. Therefore, the time series analysis apparatus 100 may be deployed based on a manner in which the time series analysis apparatus 100 obtains the time series data.

For example, the time series analysis apparatus 100 obtains the time series data from the time series database. The time series database is a database that stores time series data. FIG. 2 shows an example of a diagram of a structure of a time series database. As shown in FIG. 2, the time series database 200 is built on an underlying file system 300. The underlying file system may be, for example, a distributed file system (distributed file system, DFS), an object storage service (object storage service, OBS), or an elastic volume service (elastic volume service, EVS). The time series database 200 includes a conversion interface (stream FS) 210, a storage node (storage node) 220, a metadata node (metadata node) 230, and a query node (structured query language node, SQL node) 240. The conversion interface 210 is a conversion interface between the time series database 200 and the underlying file system 300, and is configured to implement mutual conversion between an operation of the time series database 200 and an operation of the underlying file system 300. The storage node 220 is configured to store time series data written into the time series database 200. The metadata node 230 is configured to provide persistent storage of metadata and support metadata access. The query node 240 is configured to: parse (including performing lexical analysis, syntax analysis, semantic analysis, and the like on) an SQL statement input by a client (for example, user equipment or an application program), generate a query plan based on a parsing result, and then read corresponding time series data from the storage node 220 based on the query plan and return the time series data to the client.

In some embodiments, the time series analysis apparatus 100 may be deployed on the query node 240. In this deployment manner, a user sends an SQL statement to the query node 240 via a client. After receiving the SQL statement, the query node 240 parses the SQL statement, determines an analysis mode (including the analysis mode A or the analysis mode B), reads corresponding time series data from the storage node 220, and then inputs the analysis mode and the read time series data into the time series analysis apparatus 100. After obtaining the analysis mode and the time series data, the time series analysis apparatus 100 analyzes the time series data in the analysis mode, and returns an analysis result to the client.

In some other embodiments, the time series analysis apparatus 100 may alternatively be deployed on a device other than the time series database 200, for example, a client. In this deployment manner, a user may send an SQL statement to the query node 240 via the client, and may further enable, via the client, the time series analysis apparatus 100 to determine an analysis mode (including the analysis mode A or the analysis mode B). Correspondingly, after receiving the SQL statement from the client, the query node 240 reads the corresponding time series data from the storage node 220 based on the SQL statement, and then returns the read time series data to the time series analysis apparatus 100. After obtaining the analysis mode and the time series data, the time series analysis apparatus 100 analyzes the time series data in the analysis mode, to obtain an analysis result.

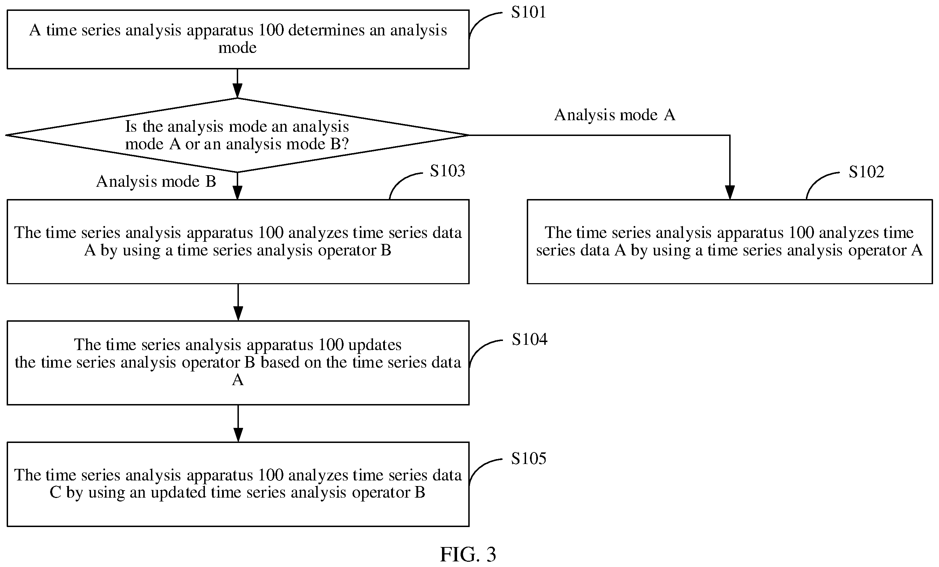

The following describes functions of the time series analysis apparatus 100 with reference to a time series data analysis method shown in FIG. 3.

S101: The time series analysis apparatus 100 determines an analysis mode. If the analysis mode is an analysis mode A, the time series analysis apparatus 100 performs S102 next. If the analysis mode is an analysis mode B, the time series analysis apparatus 100 performs S103 to S105 next.

In some embodiments, the time series analysis apparatus 100 determines the analysis mode in various manners. The following lists several possible implementations.

Manner 1: The time series analysis apparatus 100 provides an application programming interface (application programming interface, API) or a user interface (user interface, UI). A user performs an operation on the foregoing API or UI, so that the time series analysis apparatus 100 determines the analysis mode. For example, the operation performed by the user on the API or the UI includes one or more of the following: The user inputs or selects the analysis mode A or the analysis mode B; or the user inputs or selects an analysis requirement for time series data, and then the time series analysis apparatus 100 selects, from the analysis mode A and the analysis mode B based on the requirement, an analysis mode that is suitable for the requirement.

Manner 2: If the time series analysis apparatus 100 is used in the time series database shown in FIG. 2, that the time series analysis apparatus 100 determines an analysis mode includes: A user sends an SQL statement to the query node 240 in the time series database 200 via a client. After receiving the SQL statement, the query node 240 parses the SQL statement to determine the analysis mode or an analysis requirement of the user for time series data. Then the query node 240 sends information obtained through parsing to the time series analysis apparatus 100, so that the time series analysis apparatus 100 determines the analysis mode.

S102: The time series analysis apparatus 100 analyzes time series data A by using a time series analysis operator A.

Specifically, the time series analysis apparatus 100 obtains the time series data A, and then analyzes the time series data A by using the time series analysis operator A. The time series data A includes one or more pieces of data, and the data is sorted in a time sequence, to obtain a data sequence, that is, the time series data A.

In some embodiments, the time series analysis apparatus 100 obtains the time series data A in various manners. The following lists several possible implementations.

Manner 1: The time series analysis apparatus 100 provides an API or a UI, and the user performs an operation on the API or the UI to upload the time series data A to the time series analysis apparatus 100. In this way, the time series analysis apparatus 100 may obtain the time series data A.

Manner 2: If the time series analysis apparatus 100 is used in the time series database shown in FIG. 2, that the time series analysis apparatus 100 obtains time series data A includes: The user sends an SQL statement to the query node 240 in the time series database 200 via the client. After receiving the SQL statement, the query node 240 parses the SQL statement, reads the time series data A from the storage node 220, and then sends the read time series data A to the time series analysis apparatus 100. In this way, the time series analysis apparatus 100 may obtain the time series data A.

Manner 3: The time series analysis apparatus 100 may further obtain the time series data A from a big data platform (for example, Spark), a Kafka system, a portal website, or a device specified by the user.

In some embodiments, the time series analysis operator A is obtained by the time series analysis apparatus 100 through training based on the time series data A. Specifically, the time series analysis apparatus 100 obtains a first training set, and then determines, based on the first training set, a parameter of one or more models included in the time series analysis operator A, to obtain the time series analysis operator A. The first training set includes the time series data A. In addition, the first training set may further include other time series data. To be specific, the time series analysis apparatus 100 obtains the time series analysis operator A through training based on the first training set, and then analyzes some or all time series data (that is, the time series data A) in the first training set by using the trained time series analysis operator A.

In some other embodiments, the time series analysis operator A may alternatively be obtained by the time series analysis apparatus 100 through training based on time series data (for example, time series data B in the following S103) before the time series data A. For a specific training process of the time series analysis operator A, refer to the following related descriptions of S103.

S103: The time series analysis apparatus 100 analyzes the time series data A by using a time series analysis operator B.

Specifically, the time series analysis apparatus 100 obtains the time series data A, and then analyzes the time series data A by using the time series analysis operator B. In this step, a manner in which the time series analysis apparatus 100 obtains the time series data A is similar to the manner in which the time series analysis apparatus 100 obtains the time series data A in S102. Therefore, details are not described herein again.

In some embodiments, the time series analysis operator B is obtained by the time series analysis apparatus 100 through training based on the time series data B. The time series data B includes one or more pieces of data, and the data is sorted in a time sequence, to obtain the time series data B. The time series data B is before the time series data A. To be specific, the time series data is sorted in a time sequence, and each piece of data in the time series data B is data before each piece of data in the time series data A. A manner in which the time series analysis apparatus 100 obtains the time series data B is similar to the manner in which the time series analysis apparatus 100 obtains the time series data A in S102. Therefore, details are not described herein again.

Further, the time series analysis apparatus 100 trains the time series analysis operator B in the following manner: The time series analysis apparatus 100 obtains a second training set, and then determines, based on the second training set, a parameter of one or more models included in the time series analysis operator B, to obtain the time series analysis operator B. The second training set includes the time series data B, or includes the time series data B and an analysis result label of the time series data B. A setting of the analysis result label of the time series data B depends on a function of the time series analysis operator B. For example, when the time series analysis operator B is used to determine abnormal data in the time series data, the analysis result label of the time series data B may be set to be a label used to indicate whether each piece of data in the time series data B is normal data or abnormal data.

Optionally, after obtaining the time series analysis operator B through training, the time series analysis apparatus 100 further stores the parameter of the one or more models included in the time series analysis operator B. Alternatively, the time series analysis apparatus 100 stores the time series analysis operator B.

S104: The time series analysis apparatus 100 updates the time series analysis operator B based on the time series data A.

Specifically, the time series analysis apparatus 100 obtains the parameter (referred to as a first model parameter for short below) of the one or more models included in the time series analysis operator B, determines a second model parameter based on the time series data A and the first model parameter, and then determines an updated time series analysis operator B based on the second model parameter. A parameter of one or more models included in the updated time series analysis operator B is the second model parameter.

In some embodiments, the time series analysis apparatus 100 may determine the second model parameter based on the time series data A and the first model parameter by using a plurality of algorithms such as a moving average algorithm, an exponential moving average algorithm, and a stochastic gradient descent (stochastic gradient descent, SGD) algorithm. Because the first model parameter is obtained through training based on the time series data A, in the foregoing manner, the second model parameter is equivalent to being obtained through training based on the time series data A and the time series data B. In this way, compared with the first model parameter, the second model parameter is associated with both the time series data A and the time series data B. In other words, accuracy of analyzing subsequent time series data by using the second model parameter is higher.

Optionally, the time series analysis apparatus 100 stores the second model parameter. Alternatively, the time series analysis apparatus 100 stores the updated time series analysis operator B. Further, the time series analysis apparatus 100 may further delete the first model parameter.

S105: The time series analysis apparatus 100 analyzes time series data C by using the updated time series analysis operator B.

The time series data C includes one or more pieces of data. The data is sorted in a time sequence, to obtain time series data C. The time series data C is after the time series data A. To be specific, the time series data is sorted in a time sequence, and each piece of data in the time series data C is data after each piece of data in the time series data A. A manner in which the time series analysis apparatus 100 obtains the time series data C is similar to the manner in which the time series analysis apparatus 100 obtains the time series data A in S102. Therefore, details are not described herein again.

It can be learned from S102 to S105 that, the following difference exists between the analysis mode A and the analysis mode B: 1. In the analysis mode A, a trained time series analysis operator is not stored, and the time series analysis operator needs to be retrained each time the time series data is analyzed. 2. In the analysis mode B, a trained time series analysis operator is stored, to analyze future time series data. In addition, the time series analysis operator is further updated in a timely manner, so that the time series analysis operator is adapted to analysis of the future time series data. In this way, in an analysis process of subsequent time series data, the time series analysis operator does not need to be retrained.

Therefore, compared with the analysis mode A, the analysis mode B is more applicable to a scenario in which time series data needs to be analyzed periodically or frequently. For example, streaming data is analyzed. The streaming data is continuously updated time series data, and such data generally needs to be periodically analyzed. For example, in a financial scenario, a daily or hourly stock trend needs to be used to predict a stock index for the next day or the next hour. For another example, in a server operation and maintenance scenario, abnormity detection needs to be performed on latest indicator data when a service is run on a server at an hour level or a minute level. Reasons are as follows: If the analysis mode A is used, each time the time series analysis apparatus 100 analyzes the time series data, the time series analysis operator needs to be retrained, and in a process of training the time series analysis operator, a training set needs to be further obtained. For analysis in a short period (for example, per minute), there may be an overlapping part between a training set required for training a time series analysis operator this time and a training set required for training a time series analysis operator last time. Consequently, in this time of training of the time series analysis operator, the overlapping part of time series data needs to be repeatedly trained, resulting in problems of a resource waste and low efficiency of analyzing time series data. The analysis mode B can avoid the foregoing problems.

It should be understood that, in an actual use process, the user may select, based on a service requirement of the user, an appropriate analysis mode to analyze the time series data; or the user may notify the time series analysis apparatus of a service requirement of the user, so that the time series analysis apparatus selects an appropriate analysis mode for the user to analyze the time series data.

The following describes the foregoing analysis mode B in more detail by using several specific examples (Example 1 to Example 3).

Example 1: The time series analysis operator B is an operator (also referred to as a 3sigma detector) that implements abnormal data detection based on a Pauta criterion (3sigma).

The operator includes a model $f(x, \lambda)$, where $x$ is to-be-detected data, and $\lambda$ is a model (which is a threshold) used to determine whether $x$ is abnormal. Specifically, when $x \geq \lambda$, it indicates that $x$ is abnormal data. When $x < \lambda$, it indicates that $x$ is not abnormal data.

Assuming that the time series data B includes $x_1, x_2, ..., x_m$, the time series analysis apparatus 100 determines parameters of the model $f(x, \lambda)$ by using the following formulas:

$$\mu = \left( \sum_{i=1}^{m} x_i \right) / m \;;$$

$$\sigma = \sqrt{\left( \sum_{i=1}^{m} (x - \mu)^2 \right) / m};$$

and

$$\lambda = \mu + 3 * \sigma.$$

$\mu$ is a mean value of $x_1, x_2, ..., x_m$, and $\sigma$ is a mean square error of $x_1, x_2, ..., x_m$.

Next, the time series analysis apparatus 100 stores the parameters $\mu$ and $\sigma$ of the model $f(x, \lambda)$ obtained through calculation.

Assuming that the time series data A includes $x_n$, the time series analysis apparatus 100 may determine, by using the foregoing trained time series analysis operator B, whether $x_n$ is abnormal data, and then may update the foregoing parameters $\mu$ and $\sigma$ based on $x_n$ by using the following formulas, to obtain $\mu_{new}$ and $\sigma_{new}$:

$$\delta = x_n - \mu;$$

$$\mu_{\text{new}} = \mu + \alpha * \delta;$$

and

$$\sigma_{\text{new}} = (1 - \alpha)(\sigma_{\text{new}} + \alpha * \delta^2).$$

$\alpha$ is a smoothness index ($0 < \alpha < 1$).

Then the time series analysis apparatus 100 further deletes $\mu$ and $\sigma$, stores $\mu_{new}$ and $\sigma_{new}$, and obtains updated $\lambda$ through calculation based on $\mu_{new}$ and $\sigma_{new}$, to determine whether time series data after the time series data A is abnormal data.

Example 2: The time series analysis operator B is an operator used to implement autoregressive (autoregressive, AR) prediction (which may also be referred to as a streaming autoregressive predictor).

The operator includes a model $f(x, \Phi)$, where $\Phi$ is an autoregressive parameter. Assuming that the time series data B includes $x_1, x_2, ..., x_m$, the time series analysis apparatus 100 may determine parameters of the model $f(x, \Phi)$ through the following steps:

First, lag-0, lag-1, ..., and lag-p autocorrelation coefficients (that is, $\gamma_0, \gamma_1, ..., \gamma_p$) of the time series data B are calculated, and then $\Phi$ is obtained through calculation by using a Yule-Walker (Yule-Walker) formula, where the Yule-Walker formula is as follows:

$$\begin{bmatrix} \gamma_1 \\ \gamma_2 \\ \gamma_3 \\ \vdots \\ \gamma_p \end{bmatrix} = \begin{bmatrix} \gamma_0 & \gamma_{-1} & \gamma_{-2} & \cdots \\ \gamma_1 & \gamma_0 & \gamma_{-1} & \cdots \\ \gamma_2 & \gamma_1 & \gamma_0 & \cdots \\ \vdots & \vdots & \vdots & \ddots \\ \gamma_{p-1} & \gamma_{p-2} & \gamma_{p-3} & \cdots \end{bmatrix} \begin{bmatrix} \varphi_1 \\ \varphi_2 \\ \varphi_3 \\ \vdots \\ \varphi_p \end{bmatrix}.$$

$\gamma_i = \gamma_{-i}$, $i = 1, 2, ..., p$, $p < m$, and $\Phi = [\varphi_1, \varphi_2, ..., \varphi_p]$.

Next, the time series analysis apparatus 100 stores the parameters of the model $f(x, \Phi)$ obtained through calculation, where the parameters of the model $f(x, \Phi)$ include $\gamma_0, \gamma_1, ..., \gamma_p$, $\Phi$, and $T$ ($T = 0$).

Assuming that the time series data A includes $x_n, x_{n+1}, ..., x_{n+p-1}$, the time series analysis apparatus 100 predicts data $x_t = \Sigma \varphi_i x_{t-q}$ at a next moment by using the trained time series analysis operator B, where q = n, n + 1, ..., n + p - 1 and t > n + p - 1.

The time series analysis apparatus 100 may further update parameters of the model $f(x, \Phi)$ through the following steps: First, $T$ is updated to obtain $T_{new}$, where $T_{new} = T + 1$. When $T_{new} \leq \lambda$, $\gamma_0, \gamma_1, ..., \gamma_p$ and $\Phi$ are not updated. When $T_{new} > \lambda$, $\gamma_0, \gamma_1, ... \gamma_p$ is updated to obtain $\gamma_{0\text{-new}}, \gamma_{1\text{-new}}, ..., \gamma_{p\text{-new}}$, and $\Phi$ is updated to obtain $\Phi_{new}$ by using the following formulas:

$$\gamma_{i-\text{new}} = (1 - \alpha)\gamma_i + x_{n+p-1}x_{n+p-1-i};$$

and

$$\begin{bmatrix} \gamma_{1-\text{new}} \\ \gamma_{2-\text{new}} \\ \gamma_{3-\text{new}} \\ \vdots \\ \gamma_{p-\text{new}} \end{bmatrix} = \begin{bmatrix} \gamma_{0-\text{new}} & \gamma_{(-1)-\text{new}} & \gamma_{(-2)-\text{new}} & \cdots \\ \gamma_{1-\text{new}} & \gamma_{0-\text{new}} & \gamma_{(-1)-\text{new}} & \cdots \\ \gamma_{2-\text{new}} & \gamma_{1-\text{new}} & \gamma_{0-\text{new}} & \cdots \\ \vdots & \vdots & \vdots & \ddots \\ \gamma_{(p-1)-\text{new}} & \gamma_{(p-2)-\text{new}} & \gamma_{(p-3)-\text{new}} & \cdots \end{bmatrix} \begin{bmatrix} \varphi_{1-\text{new}} \\ \varphi_{2-\text{new}} \\ \varphi_{3-\text{new}} \\ \vdots \\ \varphi_{p-\text{new}} \end{bmatrix}.$$

$\alpha$ is a smoothness index ($0 < \alpha < 1$), $\gamma_{i\text{-new}} = \gamma_{(-i)\text{-new}}$, and $\Phi_{new} = [\varphi_{1\text{-new}}, \varphi_{2\text{-new}}, ..., \varphi_{p\text{-new}}]$: and then the time series analysis apparatus 100 further deletes $\gamma_0, \gamma_1, ..., \gamma_p$ and $\Phi$, and stores $T_{new}, \gamma_{0\text{-new}}, \gamma_{1\text{-new}}, ..., \gamma_{p\text{-new}}$, and $\Phi_{new}$ for predicting a target that may be achieved in the future in time domain.

Example 3: The time series analysis operator B is an operator that implements time series prediction by using an incremental learning algorithm.

The operator includes a model $f(x, \Sigma)$, where $\Sigma$ is a neural network parameter. Assuming that the time series data B includes $x_1, x_2, ..., x_m$, the time series analysis apparatus 100 may obtain parameters of the model $f(x, \Sigma)$ through training based on the time series data B, that is, $\Sigma$ and $T$ ($T = 0$), to obtain the time series analysis operator B through training. Then the time series analysis apparatus 100 further stores $\Sigma$ and $T$ ($T = 0$) above. After the time series data A is input into the trained time series analysis operator B, the time series analysis operator B is used to predict data at a next moment. In addition, the time series analysis apparatus 100 further updates the parameters of the model $f(x, \Sigma)$ in the time series analysis operator B through the following steps: First, $T$ is updated to obtain $T_{new}$, where $T_{new} = T + 1$. When $T_{new} \leq \lambda$, $\Sigma$ is not updated. When $T_{new} > \lambda$, a loss function of a neural network may be constructed by using an elastic weight consolidation (elastic weight consolidation, EWC) algorithm, and then $\Sigma$ above is updated by using an SGD and based on the constructed loss function, to obtain $\Sigma_{new}$. Then the time series analysis apparatus 100 further deletes $\Sigma$ and stores $\Sigma_{new}$, to predict a target that may be achieved in the future in time domain.

With reference to the application scenario shown in FIG. 2, the following further describes a specific implementation process of the foregoing time series data analysis method.

For example, when the user expects to use the analysis mode A to predict, based on current time series data (or historical time series data), a target that may be achieved in the future in time domain, an SQL statement input by the user may be as follows:

SELECT predict ("field_name", "static") FROM "xxx"."autogen"."forecast"WHERE time < now() AND time > now() - 2d AND"tag_key" = 'tag_value', where

"predict" indicates that a time series data at a next moment or in a next time period is predicted based on the input time series data, "field_name" indicates a name of the time series analysis operator, "static" indicates that the analysis mode selected by the user is the analysis mode A, "xxx"."autogen"."forecast" indicates an approximate location (for example, a file) of the to-be-analyzed time series data, "time < now() AND time > now() - 2d" indicates a range of the to-be-analyzed time series data (which means that time series data from the day before yesterday to the current day is selected), and "tag_key" = 'tag_value' indicates a specific location (for example, a column in a table) of the to-be-analyzed time series data.

Based on the SQL statement, the query node 240 reads the to-be-analyzed time series data from a specified location, and inputs the to-be-analyzed time series data into the time series analysis apparatus 100. Then the time series analysis apparatus 100 obtains a time series analysis operator through training based on the time series data, and analyzes the time series data by using the trained time series analysis operator, to predict time series data at a next moment or in a next time period.

For example, when the user expects to use the analysis mode B to predict, based on current time series data (or historical time series data), a target that may be achieved in the future in time domain, an SQL statement input by the user may include the following:

SELECT predict ("field_name", "train") FROM "xxx"."autogen"."forecast" WHERE time < now() AND time > now() - 2d AND "tag_key" = 'tag_value', where

"field_name" indicates a name of a time series analysis operator, "predict" indicates that a function of the time series analysis operator is to predict time series data at a next moment or in a next time period based on the input time series data, "xxx"."autogen"."forecast" indicates an approximate location (for example, a file) of the to-be-analyzed time series data, "time < now() AND time > now() - 2d" indicates a range of the to-be-analyzed time series data (which means that time series data from the day before yesterday to the current day is selected), "tag_key" = 'tag_value' indicates a specific location (for example, a column in a table) of the to-be-analyzed time series data, and "train" indicates to train the time series analysis operator named "field_name" by using the time series data obtained from the foregoing location, in other words, the time series analysis apparatus 100 obtains the time series analysis operator through training by using the SQL statement.

```
CREATE CONTINUOUS QUERY <cq_name> ON <database_name> DURATION 10m
BEGIN
  SELECT predict ("field_name", "stream") FROM "xxx".
"autogen"."forecast"AND "tag_key" = 'tag_value'
  END
```

"CREATE CONTINUOUS QUERY <cq_name> ON <database_name> DURATION 10m" indicates the time series analysis apparatus 100 to establish a timing trigger in a database (that is, database_name), where a name of the timing trigger is "cq_name", and a frequency of the timing trigger is 10 seconds, "field_name" is a name of a time series analysis operator, "predict" indicates that a function of the time series analysis operator is to predict time series data at a next moment or in a next time period based on input time series data, "stream" indicates that the analysis mode selected by the user is the analysis mode B, "xxx"."autogen"."forecast" indicates an approximate location (for example, a file) of the to-be-analyzed time series data, and "tag_key" = 'tag_value' indicates a specific location (for example, a column in a table) of the to-be-analyzed time series data.

Based on the SQL statement, the query node 240 reads the to-be-analyzed time series data from a specified location, and inputs the time series data into the time series analysis apparatus 100. Then the time series analysis apparatus 100 analyzes the time series data based on the trained time series analysis operator, and predicts time series data at a next moment or in a next time period.

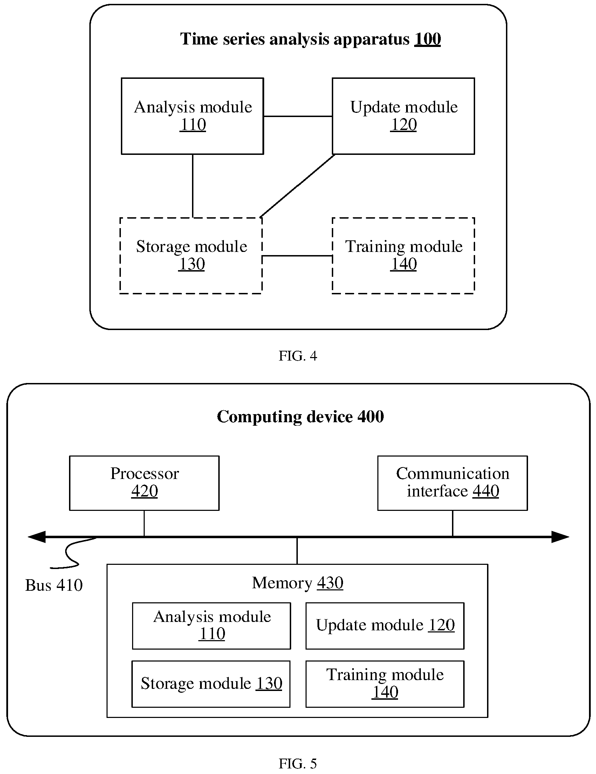

Functions of the time series analysis apparatus 100 are described in detail above. The following describes the time series analysis apparatus 100 in detail from a perspective of the time series analysis apparatus 100 with reference to FIG. 4.

FIG. 4 shows an example of a diagram of a structure of the time series analysis apparatus 100. As shown in FIG. 4, the time series analysis apparatus 100 includes an analysis module 110 and an update module 120. Optionally, the apparatus further includes a storage module 130 and a training module 140. The analysis module 110, the update module 120, the storage module 130, and the training module 140 work together to implement the steps performed by the time series analysis apparatus 100 in the foregoing method embodiments. Specifically, the analysis module 110 is configured to perform S101 to S103 and S105. The update module 120 is configured to perform S104, and store the second model parameter in the storage module 130. The storage module 130 is configured to perform the step of storing the first model parameter and the second model parameter, and send the first model parameter to the analysis module 110 when the analysis module 110 performs S103. The training module 140 is configured to perform steps related to training the time series analysis operator A and the time series analysis operator B in the foregoing method embodiments, and store the first model parameter in the time series analysis operator B in the storage module 130.

In this embodiment of this application, the analysis module 110, the update module 120, the storage module 130, and the training module 140 may all be implemented by using software, or may be implemented by using hardware. For example, the following uses the analysis module 110 as an example to describe an implementation of the analysis module 110. Similarly, for implementations of the update module 120, the storage module 130, and the training module 140, refer to the implementation of the analysis module 110.

As an example of a software functional unit, the analysis module 110 may include code run on a computing instance. The computing instance may include at least one of a physical host (computing device), a virtual machine, and a container. Further, there may be one or more computing instances. For example, the analysis module 110 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. An interconnection between VPCs is implemented through the communication gateway.

As an example of a hardware functional unit, the analysis module 110 may include at least one computing device, for example, a server. Alternatively, the analysis module 110 may be a device implemented by using an application-specific integrated circuit (application-specific integrated circuit, ASIC), a programmable logic device (programmable logic device, PLD), or the like. The PLD may be a complex programmable logical device (complex programmable logical device, CPLD), a field programmable gate array (field programmable gate array, FPGA), generic array logic (generic array logic, GAL), or any combination thereof.

The plurality of computing devices included in the analysis module 110 may be distributed in a same region, or may be distributed in different regions. The plurality of computing devices included in the analysis module 110 may be distributed in a same AZ, or may be distributed in different AZs. Similarly, the plurality of computing devices included in the analysis module 110 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, the analysis module 110 may be configured to perform any step in S101 to S105, training the time series analysis operator A and the time series analysis operator B, and storing the first model parameter and the second model parameter; and the update module 120 may be configured to perform any step in S101 to S105, training the time series analysis operator A and the time series analysis operator B, and storing the first model parameter and the second model parameter. The storage module 130 may be configured to perform any step in S101 to S105, training the time series analysis operator A and the time series analysis operator B, and storing the first model parameter and the second model parameter. The training module 140 may be configured to perform any step in S101 to S105, training the time series analysis operator A and the time series analysis operator B, and storing the first model parameter and the second model parameter. Steps that the analysis module 110, the update module 120, the storage module 130, and the training module 140 are responsible for implementing may be specified as required. The analysis module 110, the update module 120, the storage module 130, and the training module 140 respectively implement different steps in the foregoing time series data analysis method, to implement all the functions of the time series analysis apparatus 100.

An embodiment of this application further provides a computing device. As shown in FIG. 5, the computing device 400 includes a bus 410, a processor 420, a memory 430, and a communication interface 440. The processor 420, the memory 430, and the communication interface 440 communicate with each other through the bus 410. The computing device 400 may be a server or a terminal device. It should be understood that quantities of processors and memories of the computing device 400 are not limited in embodiments of this application.

The bus 410 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 5, but this does not mean that there is only one bus or only one type of bus. The bus 410 may include a path for transmitting information between the components (for example, the memory 430, the processor 420, and the communication interface 440) of the computing device 400.

The processor 420 may include any one or more of processors such as a CPU, a graphics processing unit (graphics processing unit, GPU), a microprocessor (microprocessor, MP), or a digital signal processor (digital signal processor, DSP).

The memory 430 may include a volatile memory (volatile memory), for example, a random access memory (random access memory, RAM). The processor 420 may further include a non-volatile memory (non-volatile memory), for example, a read-only memory (read-only memory, ROM), a flash memory, a hard disk drive (hard disk drive, HDD), or a solid state drive (solid state drive, SSD).

The memory 430 stores executable program code, and the processor 420 executes the executable program code to separately implement functions of the foregoing analysis module 110, update module 120, storage module 130, and training module 140, so as to implement the time series data analysis method described above. In other words, the memory 430 stores instructions used to perform the time series data analysis method described above.

The communication interface 440 uses a transceiver module, for example, but not limited to, a network interface card or a transceiver, to implement communication between the computing device 400 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

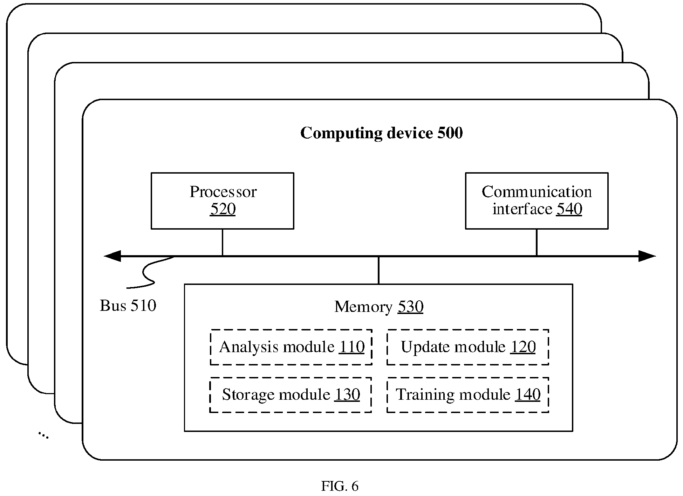

As shown in FIG. 6, the computing device cluster includes one or more computing devices 500. Each computing device 500 includes a bus 510, a processor 520, a memory 530, and a communication interface 540. The processor 520, the memory 530, and the communication interface 540 communicate with each other through the bus 510. It should be understood that quantities of processors and memories of the computing device 500 are not limited in embodiments of this application.

The bus 510 may be a PCI bus, an EISA bus, or the like. The bus may be classified into an address bus, a data bus, a control bus, or the like. For ease of representation, only one line is used for representation in FIG. 6, but this does not mean that there is only one bus or only one type of bus. The bus 510 may include a path for transmitting information between components (for example, the memory 530, the processor 520, and the communication interface 540) of the computing device 500.

The processor 520 may include any one or more of processors such as a CPU, a GPU, an MP, or a DSP.

The memory 530 may include a volatile memory (volatile memory), for example, a RAM. The processor 520 may further include a non-volatile memory (non-volatile memory), for example, a ROM, a flash memory, an HDD, or an SSD.

The communication interface 540 uses a transceiver module, for example, but not limited to, a network interface card or a transceiver, to implement communication between the computing device 500 and another computing device 500 or a communication network.

In some embodiments, the memory 530 of the one or more computing devices 500 in the computing device cluster may store same instructions used to perform the foregoing time series data analysis method.

In some other embodiments, the memory 530 of the one or more computing devices 500 in the computing device cluster may separately store some instructions used to perform the foregoing time series data analysis method. In other words, a combination of the one or more computing devices 500 may jointly execute instructions used to perform the foregoing time series data analysis method.

It should be noted that memories 530 of different computing devices 500 in the computing device cluster may store different instructions that are respectively used to perform some functions of the time series analysis apparatus 100. In other words, instructions stored in the memories 530 of different computing devices 500 may be used to implement functions of one or more of the foregoing analysis module 110, update module 120, storage module 130, and training module 140.

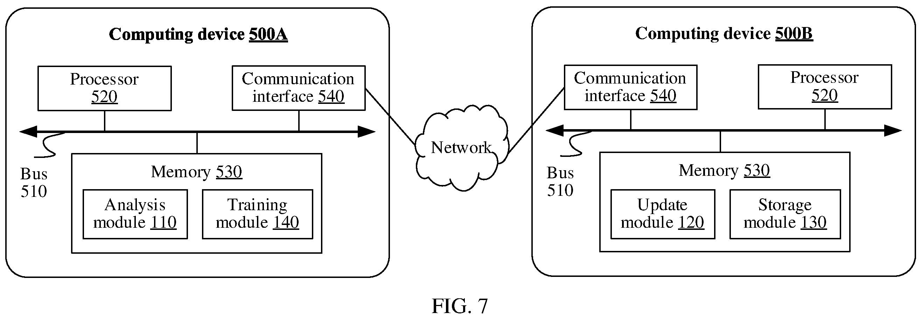

In some embodiments, one or more computing devices in the computing device cluster may be connected through a network. The network may be a wide area network, a local area network, or the like. FIG. 7 shows a possible implementation. As shown in FIG. 7, two computing devices 500A and 500B are connected through a network. Specifically, each computing device is connected to the network through a communication interface of the computing device. In this possible implementation, a memory 530 of the computing device 500A stores instructions for performing functions of the analysis module 110 and the training module 140. In addition, a memory 530 of the computing device 500B stores instructions for performing functions of the update module 120 and the storage module 130.

It should be understood that functions of the computing device 500A shown in FIG. 7 may alternatively be completed by a plurality of computing devices 500. Similarly, functions of the computing device 500B may alternatively be completed by a plurality of computing devices 500.

An embodiment of this application further provides a computer program product including instructions. The computer program product may be software or a program product that includes instructions and that can run on a computing device or can be stored in any usable medium. When the computer program product runs on at least one computing device, the at least one computing device is enabled to perform the time series data analysis method described above.

An embodiment of this application further provides a computer-readable storage medium. The computer-readable storage medium may be any usable medium that can be stored by a computing device or a data storage device such as a data center that includes one or more usable media. The usable medium may be a magnetic medium (for example, a floppy disk, a hard disk, or a magnetic tape), or an optical medium (for example, DVD), a semiconductor medium (for example, a solid state disk), or the like. The computer-readable storage medium includes instructions. The instructions indicate the computing device to perform the time series data analysis method described above, or indicate the computing device to perform the time series data analysis method described above.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, and such modifications or replacements do not cause the essence of corresponding technical solutions to depart from the protection scope of the technical solutions in embodiments of this application.

## Claims

1. A time series data analysis method, comprising:

   in response to a first analysis mode input by a user, analyzing first time series data by using a first time series analysis operator;
   updating the first time series analysis operator based on the first time series data and a first model parameter in the first time series analysis operator; and
   analyzing second time series data by using an updated first time series analysis operator, wherein the second time series data is after the first time series data.

2. The method according to claim 1, wherein the updating the first time series analysis operator based on the first time series data and a first model parameter in the first time series analysis operator comprises:

   determining a second model parameter based on the first time series data and the first model parameter; and
   determining the updated first time series analysis operator based on the second model parameter.

3. The method according to claim 2, wherein the method further comprises:
   storing the second model parameter.

4. The method according to any one of claims 1 to 3, wherein the first time series analysis operator is obtained through training based on third time series data, and the third time series data is before the first time series data.

5. The method according to claim 4, wherein the method further comprises:
   obtaining the first time series data, the second time series data, and the third time series data from a time series database.

6. The method according to claim 1, wherein the method further comprises:
   in response to a second analysis mode input by the user, analyzing the first time series data by using a second time series analysis operator, wherein the second time series analysis operator is obtained through training based on the first time series data.

7. A time series analysis apparatus, comprising:

   an analysis module, configured to: in response to a first analysis mode input by a user, analyze first time series data by using a first time series analysis operator; and
   an update module, configured to update the first time series analysis operator based on the first time series data and a first model parameter in the first time series analysis operator, wherein
   the analysis module is further configured to analyze second time series data by using an updated first time series analysis operator, wherein the second time series data is after the first time series data.

8. The apparatus according to claim 7, wherein
the update module is configured to determine a second model parameter based on the first time series data and the first model parameter, and determine the updated first time series analysis operator based on the second model parameter.

9. The apparatus according to claim 8, wherein the apparatus further comprises:
a storage module, configured to store the second model parameter.

10. The apparatus according to any one of claims 7 to 9, wherein the first time series analysis operator is obtained through training based on third time series data, and the third time series data is before the first time series data.

11. The apparatus according to claim 10, wherein
the analysis module is further configured to obtain the first time series data, the second time series data, and the third time series data from a time series database.

12. The apparatus according to claim 7, wherein
the analysis module is further configured to: in response to a second analysis mode input by the user, analyze the first time series data by using a second time series analysis operator, wherein the second time series analysis operator is obtained through training based on the first time series data.

13. A computing device, comprising a processor and a memory, wherein the processor executes computer program code in the memory to implement the method according to any one of claims 1 to 6.

14. A computer-readable storage medium, storing computer program code, wherein when the computer program code is executed by a computing device, the computing device performs the method according to any one of claims 1 to 6.

**Time series analysis apparatus 100**

Analysis mode A

Time series data →

Time series analysis operator

(Update)

Analysis mode B

→ Analysis result

FIG. 1

_200_

Storage node 220

Metadata node 230

Query node 240

Time series analysis apparatus 100

...

...

...

Storage node 220

Metadata node 230

Query node 240

Time series analysis apparatus 100

Time series analysis apparatus 100

Conversion interface 210

Underlying file system 300

FIG. 2

EP 4 560 487 A1

```
┌─────────────────────────────────────────────┐
│ A time series analysis apparatus 100          │ ⟋ S101
│ determines an analysis mode                   │
└─────────────────────────────────────────────┘
                      │
                      ▼
              ╱───────────────╲                          Analysis mode A
         ╱  Is the analysis mode an  ╲────────────────────────────────┐
         ╲  analysis mode A or an    ╱                                 │
              ╲  analysis mode B?  ╱                                   │
                ╲───────────────╱                                     │
     Analysis mode B │           ⟋ S103                                │        ⟋ S102
                     ▼                                                 ▼
┌─────────────────────────────────────────┐   ┌───────────────────────────────────────────┐
│ The time series analysis apparatus 100   │   │ The time series analysis apparatus 100      │
│ analyzes time series data A by using a   │   │ analyzes time series data A by using a      │
│ time series analysis operator B          │   │ time series analysis operator A             │
└─────────────────────────────────────────┘   └───────────────────────────────────────────┘
                     │
                     ▼
┌─────────────────────────────────────────┐
│ The time series analysis apparatus 100   │ ⟋ S104
│ updates the time series analysis         │
│ operator B based on the time series      │
│ data A                                    │
└─────────────────────────────────────────┘
                     │
                     ▼
┌─────────────────────────────────────────┐
│ The time series analysis apparatus 100   │ ⟋ S105
│ analyzes time series data C by using an  │
│ updated time series analysis operator B  │
└─────────────────────────────────────────┘
```

FIG. 3

**Time series analysis apparatus 100**

Analysis module
110

Update module
120

Storage module
130

Training module
140

FIG. 4

**Computing device 400**

Processor
420

Communication
interface 440

Bus 410

Memory 430

Analysis module
110

Update module 120

Storage module 130

Training module
140

FIG. 5

**Computing device 500**

Processor
520

Communication
interface 540

Bus 510

Memory 530

Analysis module 110

Update module 120

Storage module 130

Training module 140

FIG. 6

**Computing device 500A**

| Processor 520 | Communication interface 540 |

Bus 510

**Memory 530**

| Analysis module 110 | Training module 140 |

Network

**Computing device 500B**

| Communication interface 540 | Processor 520 |

Bus 510

**Memory 530**

| Update module 120 | Storage module 130 |

FIG. 7

| **INTERNATIONAL SEARCH** | International application No. |
|---|---|
| | **PCT/CN2023/110392** |

**A.      CLASSIFICATION OF SUBJECT MATTER**

G06F 16/2458(2019.01)i

According to International Patent Classification (IPC) or to both national classification and IPC

**B.      FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; WOTXT; EPTXT; CNKI: 时序, 分析, 模式, 参数, 更新, 模型, time series, analysis, pattern, parameter, update, model

**C.      DOCUMENTS CONSIDERED TO BE RELEVANT**

| Category* | Citation of document, with indication, where appropriate, of the relevant passages | Relevant to claim No. |
|---|---|---|
| Y | CN 112148557 A (BEIJING NETWORKBENCH INC.) 29 December 2020 (2020-12-29) description, paragraphs 26-43 | 1-14 |
| Y | CN 113159934 A (INDUSTRIAL AND COMMERCIAL BANK OF CHINA CO., LTD.) 23 July 2021 (2021-07-23) description, paragraphs 46-100 | 1-14 |
| Y | CN 107967359 A (BAIDU ONLINE NETWORK TECHNOLOGY (BEIJING) CO., LTD.) 27 April 2018 (2018-04-27) description, paragraphs 59-88 | 1-14 |
| A | US 2018039905 A1 (IBM) 08 February 2018 (2018-02-08) entire document | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 October 2023** | **01 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH**
**Information on patent family members**

International application No.

**PCT/CN2023/110392**

| Patent document cited in search report | | | Publication date (day/month/year) | Patent family member(s) | | | Publication date (day/month/year) |
|---|---|---|---|---|---|---|---|
| CN | 112148557 | A | 29 December 2020 | CN | 112148557 | B | 08 October 2021 |
| CN | 113159934 | A | 23 July 2021 | None | | | |
| CN | 107967359 | A | 27 April 2018 | US | 2019196933 | A1 | 27 June 2019 |
| | | | | US | 11216353 | B2 | 04 January 2022 |
| | | | | CN | 107967359 | B | 17 May 2022 |
| US | 2018039905 | A1 | 08 February 2018 | None | | | |

Form PCT/ISA/210 (patent family annex) (July 2022)

**REFERENCES CITED IN THE DESCRIPTION**

**Patent documents cited in the description**

- CN 202211020433